Europäisches Patentamt

European Patent Office

Office européen des brevets

(11) Numéro de publication: **0 195 711 B1**

(12) **FASCICULE DE BREVET EUROPEEN**

(45) Date de publication du fascicule du brevet:
03.10.90

(51) Int. Cl.⁵: **H04N 9/31**

(21) Numéro de dépôt: **86400519.4**

(22) Date de dépôt: **11.03.86**

(54) Dispositif de réglage de géométrie pour vidéoprojecteur.

(30) Priorité: **15.03.85 FR 8503901**

(43) Date de publication de la demande:
**24.09.86 Bulletin 86/39**

(45) Mention de la délivrance du brevet:
**03.10.90 Bulletin 90/40**

(84) Etats contractants désignés:
**BE CH DE GB IT LI NL**

(56) Documents cités:
**US-A- 3 943 279**
**US-A- 4 395 662**

**PROCEEDINGS OF THE S.I.D.,**
**vol. 23, no. 3, 1982, pages 151-158, Los Angeles, Ca., US;**
**S.J. ELMER: "A color calligraphic CRT projector for flight simulation"**

(73) Titulaire: **SOCIETE ELECTRONIQUE DE LA REGION PAYS DE LOIRE, 74, rue du Surmelin, F-75020 Paris(FR)**

(72) Inventeur: **Ahmari, Hossein, THOMSON-CSF SCPI 19, avenue de Messine, F-75008 Paris(FR)**
Inventeur: **Colineau, Joseph, THOMSON-CSF SCPI 19, avenue de Messine, F-75008 Paris(FR)**

(74) Mandataire: **Grynwald, Albert et al, THOMSON-CSF SCPI, F-92045 PARIS LA DEFENSE CEDEX 67(FR)**

## Description

L'invention est relative à un dispositif de réglage de convergence et géométrie pour un vidéoprojecteur à plusieurs tubes à rayons cathodiques.

Un vidéoprojecteur est un récepteur de télévision projetant des images sur un écran de plus grandes dimensions que les écrans habituels des tubes à rayons cathodiques. Le type le plus courant comporte trois tubes à rayons cathodiques, un pour chaque couleur fondamentale, et, pour chacun de ces tubes, une optique de projection sur un écran.

Un vidéoprojecteur comporte habituellement des circuits de correction de géométrie agissant sur le balayage des trois tubes pour corriger les déformations usuelles de l'image de télévision telles que le coussin nord-sud, le coussin est-ouest ainsi que les déformations spécifiques au vidéoprojecteur, qui sont dûes à l'inclinaison variable des axes des tubes par rapport à une perpendiculaire à l'écran. En effet le cas le plus courant est un écran vertical et des tubes dont les axes ne sont pas dans un plan horizontal mais dans un plan incliné vers le haut dans le sens de la projection; la forme de la surface de projection constitue aussi une cause possible de déformation géométrique de l'image.

Ces défauts de géométrie sont corrigés en agissant sur les champs de déviation horizontale et verticale à l'aide de circuits de correction de géométrie. De tels circuits de correction de géométrie sont connus par exemple du document US-A 4 395 662. Certaines corrections de géométrie sont indépendantes de l'orientation des tubes par rapport à l'écran ou de la forme de ces derniers; elles sont généralement effectuées par le constructeur. Les autres corrections sont effectuées par l'utilisateur (ou l'installateur) : il s'agit des défauts de trapèze horizontal, de linéarité verticale et d'amplitude verticale. Le défaut d'amplitude verticale est un écart de la hauteur de l'image par rapport à la normale; le défaut de linéarité verticale consiste en la nonconservation des distances selon la direction verticale et le défaut de trapèze horizontal est une déformation de l'image qui, au lieu d'être rectangulaire, a une forme de trapèze à bords horizontaux parallèles. Ces corrections peuvent être effectuées par réglage de la position de l'écran par rapport à celle du vidéoprojecteur. Cette opération est relativement malaisée à effectuer. C'est pourquoi on prévoit souvent d'agir sur le balayage pour effectuer ces corrections ; dans les dispositifs connus, on prévoit trois réglages sur l'appareil : le premier pour l'amplitude, le second pour la linéarité et le troisième pour le défaut de trapèze. Ces réglages sont également malaisés à mettre en oeuvre.

L'invention remédie à cet inconvénient.

Le dispositif de réglage selon l'invention comporte un circuit de réglage de géométrie à effectuer par l'utilisateur, un seul paramètre (donc un seul réglage) étant utilisé pour corriger ensemble les défauts de trapèze horizontal, de linéarité verticale et d'amplitude verticale. Le moyen de réglage est de préférence sur un boîtier de télécommande.

Dans une réalisation, chacun des trois tubes comporte un bobinage auxiliaire auquel sont appliqués les signaux de correction de géométrie, que ces corrections soient effectuées par le constructeur ou par l'utilisateur.

Dans un exemple, on prévoit un intégrateur d'un signal à fréquence trame dont la valeur initiale (qui constitue ledit paramètre unique) est réglable par l'utilisateur et dont le signal de sortie est utilisé pour effectuer les corrections d'amplitude verticale et la correction de trapèze horizontal ainsi qu'un second intégrateur alimenté par le signal de sortie du premier intégrateur pour commander la correction de linéarité en direction verticale.

Par ailleurs, les images produites par les trois tubes doivent se superposer parfaitement sur l'écran. Ce résultat est pratiquement impossible à atteindre par de simples réglages d'orientation des tubes et des optiques de projection. Les raisons de cette impossibilité sont diverses : la dispersion, inhérente à la fabrication en grande série, des formes d'images produites par chacun des tubes ; les objectifs, habituellement en matière plastique, qui, pour des raisons d'économie, ne présentent pas de corrections chromatiques et qui, ainsi, n'ont pas le même indice de réfraction pour les trois couleurs fondamentales ; les axes des trois tubes ne peuvent pas être tous perpendiculaires à l'écran de projection : en général l'axe du tube projetant l'image verte est en principe perpendiculaire à l'écran et les axes des tubes projetant les images rouge et bleue sont inclinés en sens contraire par rapport à cette perpendiculaire ; ainsi l'image verte peut être rectangulaire alors que les images rouge et bleue ont une forme de trapèze à bords parallèles verticaux (défaut de trapèze vertical).

C'est pourquoi un vidéoprojecteur comprend un circuit de correction ou réglage de convergence qui engendre des courants alimentant des bobines agissant sur les déviations horizontale et verticale du faisceau d'électrons de deux des tubes, en général le rouge et le bleu, pour mettre en forme les images correspondantes afin qu'elles se superposent, sur l'écran, à l'image projetée par le premier tube, à savoir le vert. Un tel circuit de correction de convergence est connu par exemple du document US-A 3 943 279. Cette correction est effectuée soit directement sur les courants des bobines de déviation ligne (horizontale) et de déviation trame (verticale) grâce à des éléments actifs et des modulateurs, soit à l'aide de déviateurs auxiliaires, de préférence les mêmes que ceux utilisés pour les corrections de géométrie.

D'autres caractéristiques et avantages de l'invention apparaîtront avec la description de certains de ses modes de réalisation, celle-ci étant effectuée en se référant aux dessins ci-annexés sur les quels :

- la figure 1 est un schéma simplifié de vidéoprojecteur à trois tubes,
- la figure 2 est un schéma d'ensemble d'un circuit selon l'invention,
- la figure 3 est un schéma plus détaillé, et
- la figure 4 est un schéma de boîtier de télécommande faisant partie du dispositif de l'invention.

Dans l'exemple le vidéoprojecteur 10 comporte trois tubes monochromes 11, 12 et 13 projetant des images de couleurs respectivement verte V, rouge R et bleue B sur un écran 14 grâce à des objectifs, respectivement $11_1$, $12_1$ et $13_1$.

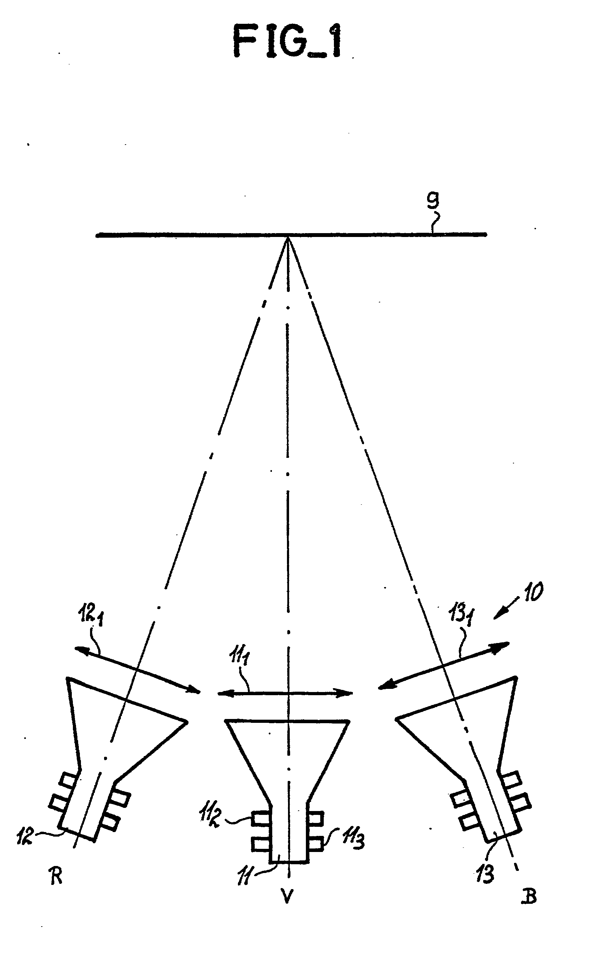

Chaque tube comporte des déviateurs principaux pour assurer les balayages horizontal et vertical du faisceau d'électrons produit par le canon à électrons dans ce tube et une paire de déviateurs auxiliaires agissant également sur le faisceau d'électrons pour effectuer les corrections de géométrie et de convergence. Sur la figure 1, pour le tube vert 11, la paire de déviateurs principaux porte la référence $11_2$ et la paire auxiliaire porte la référence $11_3$.

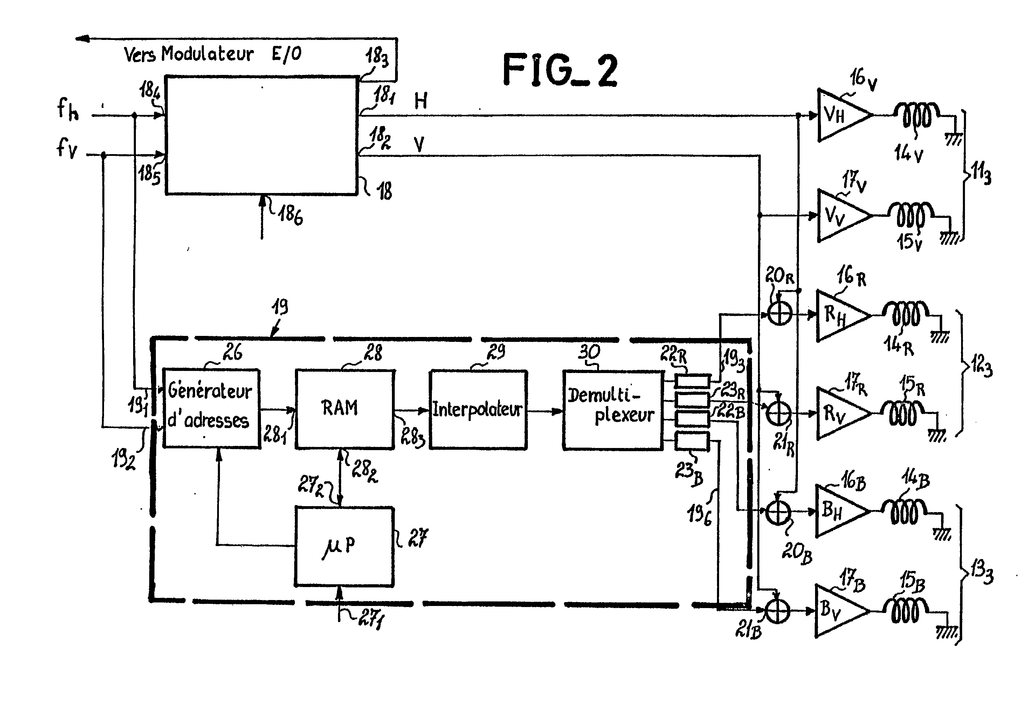

Chaque paire de déviateurs se compose de deux bobinages, l'un pour la déviation horizontale 14 et l'autre pour la déviation verticale 15. Sur la figure 2 les chiffres de référence de ces bobinages ont été affectés d'un indice correspondant à la couleur du tube correspondant, V pour le vert, R pour le rouge et B pour le bleu. Chaque bobinage est alimenté en courant électrique par un amplificateur de convergence, de référence 16 pour la déviation horizontale et de référence 17 pour la déviation verticale. Chaque amplificateur 16, 17 fournit sur sa sortie un courant d'intensité proportionnelle à la tension présentée sur son entrée. La déviation du spot sur l'écran par rapport à sa position nominale est proportionnelle à l'intensité du courant traversant le déviateur.

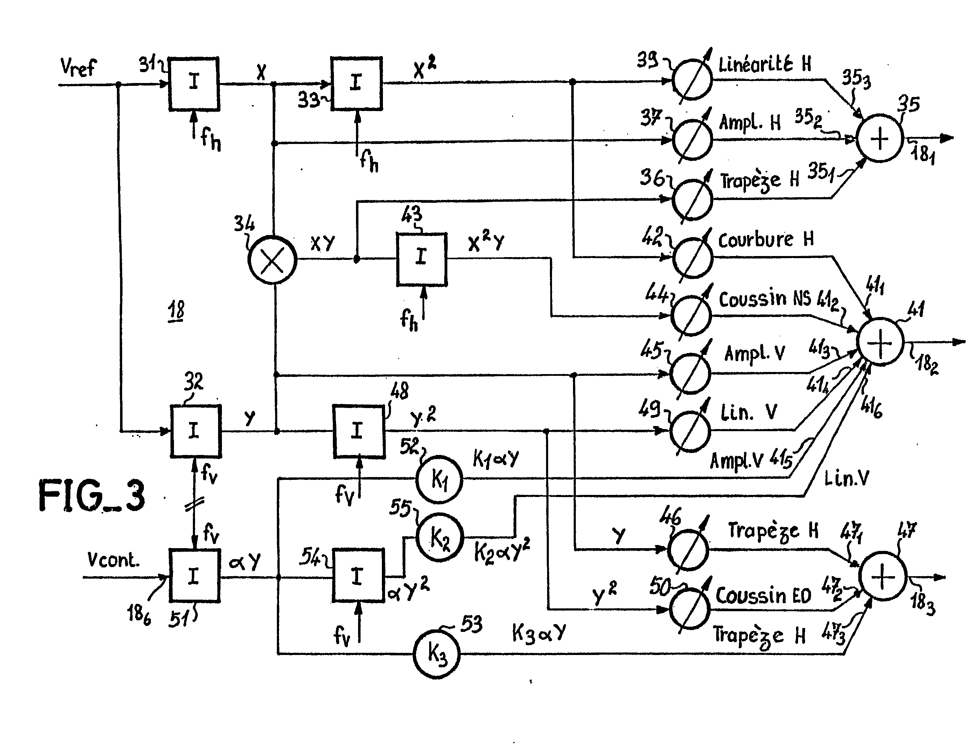

On a représenté sur la figure 2, d'une part, le circuit de correction de géométrie 18 et, d'autre part, un circuit de réglage de convergence 19. Le circuit de correction de géométrie 18 présente deux sorties $18_1$ et $18_2$ alimentant les entrées de tous les amplificateurs de convergence horizontaux et verticaux, et une troisième sortie $18_3$ commandant un modulateur est-ouest (non représenté) associé aux déviateurs principaux. Comme on le verra ci-après en relation avec la figure 3 ce circuit 18 présente deux entrées $18_4$ et $18_5$ recevant des signaux aux fréquences de balayage respectivement horizontal (ou ligne) $f_h$ et vertical (ou trame) $f_v$.

Le circuit de correction de géométrie 18 alimente les trois paires d'amplificateurs de convergence 16 et 17. Par contre le circuit de correction de convergence 19 n'alimente que deux paires d'amplificateurs de convergence, ceux qui sont associés au tube 12 rouge(R) et au tube bleu 13(B). Pour permettre l'alimentation simultanée de ces amplificateurs de convergence $16_R$, $16_B$, $17_R$, $17_B$ par les circuits 18 et 19 on prévoit un additionneur $20_R$, $21_R$, $20_B$, $21_B$ pour chacun de ces quatre amplificateurs.

Le circuit 19 présente, comme le circuit 18, deux entrées $19_1$ et $19_2$ recevant des signaux aux fréquences de balayage ligne $f_h$ et trame $f_v$. Il comporte avant ses quatre sorties $19_3$ à $19_6$, alimentant les entrées correspondantes des additionneurs $20_R$, $21_R$, $20_B$, $21_B$, des convertisseurs numériques-analogiques $22_R$, $23_R$, $22_B$, $23_B$.

Le circuit de réglage de convergence 19, dont le rôle est de superposer les images rouge et bleue à l'image verte, est basé sur la division de l'écran en 208 zones : 16 zones, en direction horizontale et 13 zones en direction verticale dont une zone 24 d'initialisation correspondant à l'intervalle de suppression trame.

A chacune des zones sont affectées quatre valeurs de correction, c'est-à-dire quatre signaux sur les sorties $19_3$ à $19_6$.

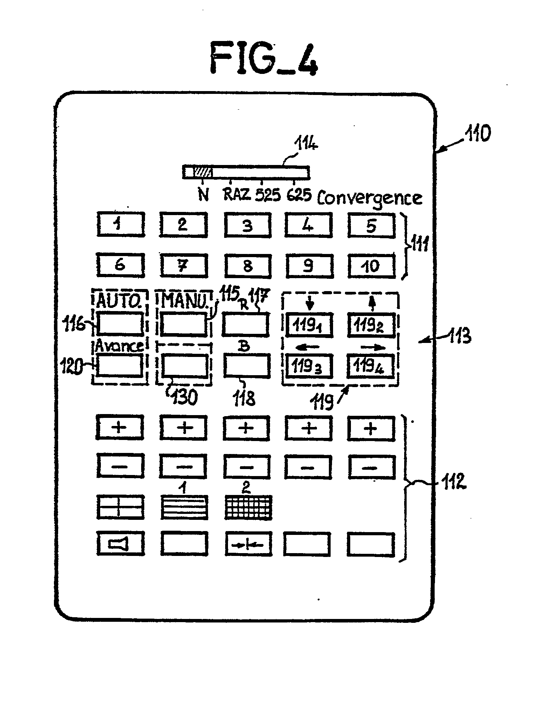

Le découpage en zones est effectué à l'aide d'un générateur d'adresses 26 recevant les signaux de fréquences $f_h$ et $f_v$ et, pour permettre la modification de la séquence des signaux d'adresses en cas de changement de standard, à l'aide d'un microprocesseur 27, faisant également partie du circuit 19, et qui présente une entrée $27_1$ recevant des signaux d'un boîtier de télécommande (figure 4). Le microprocesseur intervient aussi pour le calcul des signaux de correction.

Ces signaux de correction sont stockés dans une mémoire vive RAM 28 de capacité 2 kilo-octets avec une entrée $28_1$ connectée à la sortie du générateur d'adresses 26 et une entrée-sortie $28_2$ connectée à une entrée-sortie $27_2$ du microprocesseur 27. A cette mémoire vive 28 est associé un accumulateur (non représenté) pour sauvegarder son contenu lorsque le circuit est débranché de son alimentation en énergie électrique.

La sortie $28_3$ de la mémoire 28 est reliée à l'entrée d'un interpolateur 29 dont le rôle est de lisser les valeurs de correction d'une zone verticale à une autre (dans une même colonne). Les signaux de sortie de cet interpolateur 29 sont en série, comme les signaux de la mémoire 28; ils alimentent un démultiplexeur 30 relié aux quatre sorties $19_3$ à $19_6$ par les convertisseurs numériques-analogiques 22 et 23.

Le microprocesseur 27 est utilisé lors de la phase de réglage des convergences pour modifier le contenu de la mémoire 28 en fonction des ordres émis par l'utilisateur. Ce microprocesseur 27 est également utilisé pour transformer automatiquement les valeurs de correction emmagasinées dans la mémoire 28 lors d'un changement de standard, sans que l'utilisateur ait à intervenir, par exemple quand on passe du standard SECAM au standard NTSC à 525 lignes par image. Autrement dit il n'est pas nécessaire d'effectuer un nouveau réglage quand on change de standard.

Le circuit 18 de correction de géométrie (figure 3) engendre des signaux - qui ne peuvent être modifiés par l'utilisateur - pour effectuer les corrections classiques de défauts géométriques intrinsèques au balayage en télévision. Ce circuit 18 engendre aussi des signaux réglables par l'utilisateur grâce au boîtier de télécommande agissant par la touche 130 (figure 4) sur l'entrée $18_6$. Ces réglages accessibles à l'utilisateur sont ceux qui permettent de compenser la non-perpendicularité à l'écran 9 des trois faisceaux lumineux projetés par les objectifs $11_1$, $12_1$ et $13_1$. Ces réglages affectent d'abord l'amplitude verticale, c'est-à-dire qu'ils modifient la hauteur de l'image. Ils affectent aussi la linéarité verticale, c'est-à-dire qu'ils permettent de rétablir les distances en direction verticale. Enfin l'utilisateur peut effectuer aussi le réglage de "trapèze horizontal" pour modifier la longueur des lignes afin de rétablir la forme rectangulaire de l'image.

Les réglages non accessibles à l'utilisateur comprennent aussi des réglages d'amplitude verticale, de linéarité verticale et de trapèze horizontal. En outre on prévoit des corrections de linéarité horizontale, d'amplitude horizontale, de courbure horizontale, de coussin nord-sud et de coussin est-ouest.

Pour élaborer les corrections de géométrie non réglables par l'utilisateur, qui sont dites "fixes", on part d'une tension de référence $V_{ref}$ qu'on intègre à la fréquence-ligne $f_h$ et à la fréquence-trame $f_v$ pour former des signaux proportionnels à x, à $x^2$, à y, à $y^2$, à xy et à $x^2y$, x et y étant les coordonnées, respectivement horizontale et verticale, du spot sur l'écran.

Pour les corrections accessibles à l'utilisateur, dites "variables", on part d'une tension de contrôle $V_{cont}$, de valeur réglable par l'utilisateur à partir du boîtier de télécommande, qu'on intègre à la fréquence trame pour former des signaux proportionnels à y et $y^2$.

Le signal $V_{ref}$ est appliqué à l'entrée d'un premier intégrateur 31 remis à zéro à la fréquence ligne $f_h$ et à l'entrée d'un intégrateur 32 remis à zéro à la fréquence trame $f_v$. Sur la sortie de l'intégrateur 31 on obtient un signal x qui est appliqué à l'entrée d'un second intégrateur 33 commandé aussi à la fréquence $f_h$ et délivrant ainsi sur sa sortie un signal $x^2$.

La sortie de l'intégrateur 31 est reliée à la première entrée d'un multiplicateur 34 dont la seconde entrée reçoit le signal de sortie de l'intégrateur 32, c'est-à-dire le signal y. Ainsi la sortie du multiplicateur 34 délivre un signal xy qui est appliqué sur une entrée $35_1$ d'un additionneur 35 par l'intermédiaire d'un potentiomètre 36 de réglage de trapèze horizontal.

Le signal de sortie de l'intégrateur 31 est aussi appliqué sur une seconde entrée $35_2$ de l'additionneur 35 par l'intermédiaire d'un autre potentiomètre 37 de réglage de l'amplitude horizontale. L'additionneur 35 comporte une troisième entrée $35_3$ recevant le signal $x^2$ de sortie de l'intégrateur 33 avec un coefficient qui dépend du réglage d'un potentiomètre 39 de linéarité horizontale. La sortie de l'additionneur 35 constitue la sortie $18_1$ de correction horizontale du générateur 18.

Le signal $x^2$ de sortie de l'intégrateur 33 est également appliqué sur la première entrée $41_1$ d'un autre additionneur 41 par l'intermédiaire d'un potentiomètre 42 de réglage de la courbure horizontale. La sortie de l'additionneur 41 constitue la sortie $18_2$ de correction verticale du générateur 18.

La sortie xy du multiplicateur 34 est appliquée à l'entrée d'un autre intégrateur 43 commandé à la fréquence ligne $f_h$ et délivrant donc sur sa sortie un signal $x^2y$ qui est appliqué, par l'intermédiaire d'un potentiomètre 44, sur la seconde entrée $41_2$ de l'additionneur 41. Le signal sur l'entrée $41_2$ effectue la correction de coussin nord-sud.

La sortie de l'intégrateur 32 qui délivre un signal y est transmise à la troisième entrée $41_3$ de l'additionneur 41 par l'intermédiaire d'un potentiomètre 45 de réglage de l'amplitude verticale. Le signal de sortie de l'intégrateur 32 est aussi appliqué, par l'intermédiaire d'un potentiomètre 46, à la première entrée $47_1$ d'un additionneur 47 dont la sortie constitue la sortie $18_3$ du circuit 18 qui est reliée à un modulateur est-ouest, c'est-à-dire à un circuit effectuant une multiplication par x. Le signal appliqué sur l'entrée $47_1$ effectue une correction de trapèze horizontal.

Le signal y de sortie de l'intégrateur 32 est appliqué sur l'entrée d'un autre intégrateur 48 commandé à la fréquence de balayage trame et délivrant donc sur sa sortie un signal $y^2$ qui est appliqué, par l'intermédiaire d'un potentiomètre 49, sur la quatrième entrée $41_4$ de l'additionneur 41. Ce signal sur l'entrée $41_4$ contribue à la correction de linéarité verticale. Le signal $y^2$ est aussi appliqué sur la seconde entrée $47_2$ de l'additionneur 47 par l'intermédiaire d'un autre potentiomètre 50 pour effectuer la correction de coussin est-ouest.

La tension de contrôle $V_{cont}$ réglable par l'utilisateur à l'aide de la télécommande (touche 130, figure 4) est appliquée sur l'entrée d'un intégrateur 51 commandé à la fréquence verticale $f_v$ et délivrant ainsi sur sa sortie un signal proportionnel à y, soit $\alpha y$. Ce signal $\alpha y$ est transmis à la cinquième entrée $41_5$ de l'additionneur 41 par l'intermédiaire d'une résistance 52 (ou plusieurs résistances) multipliant par un coefficient $K_1$. Le signal $K_1 \alpha y$ sur l'entrée $41_5$ permet d'effectuer la correction d'amplitude verticale.

Le signal $\alpha y$ de sortie de l'intégrateur 51 est appliqué, par l'intermédiaire d'une (ou plusieurs) résistance(s) 53 multipliant par un coefficient $K_3$, sur la troisième entrée $47_3$ de l'additionneur 47. Le signal en $47_3$ contribue à la correction de trapèze horizontal.

Le signal $\alpha y$ alimente l'entrée d'un intégrateur 54 commandé à la fréquence de balayage vertical et délivrant ainsi sur sa sortie un signal $\alpha y^2$ qui est transmis sur une sixième entrée $41_6$ de l'additionneur 41 par l'intermédiaire d'une (ou plusieurs) résistance(s) 55 multipliant par un coefficient $K_2$. Le signal $K_2 \alpha y^2$ appliqué sur l'entrée $41_6$ permet d'effectuer la correction de linéarité verticale.

Il est à noter que le modulateur est-ouest, qui reçoit les signaux de sortie de l'additionneur 47 et fait partie du circuit de base du vidéoprojecteur, apporte la correction de plus grande amplitude, ce qui est particulièrement utile pour la correction de trapèze horizontal qui est la correction la plus importante à effectuer.

Enfin la tension de référence des intégrateurs à fréquence verticale 32, 48, 51 et 54 est réglable, sous la commande du microprocesseur 27, lors d'un changement de standard. Il est à noter aussi que la tension de référence des convertisseurs 22, 23 est également réglable et pour la même raison.

Pour contrôler le vidéoprojecteur et effectuer les réglages, l'utilisateur dispose d'un boîtier de télécommande 110 (figure 4) qui comporte les touches classiques 111 de numéros de canal mis en mémoire, et 112 de réglage de volume sonore, de luminosité, d'intensité de couleurs, de recherche de stations et de fréquence d'accord. Ce boîtier comporte en plus, un ensemble 113 de touches pour les corrections de géométrie (touche 130) et de convergence, ainsi qu'un commutateur 114 permettant, selon sa position, que le boîtier 110 de télécommande soit utilisé en mode normal N pour le contrôle des fonctions du vidéoprojecteur, c'est-à-dire pour l'utilisation des touches 111 et 112, ou en mode de réglage indiqué par les positions "convergence" sur la figure 4 avec deux positions correspondant aux deux standards 525 et 625 lignes. En outre on prévoit une position RAZ pour la remise à zéro, ou un retour à un état initial, du contenu de la mémoire 28.

Il est à noter que le circuit de réglage de convergence et de géométrie de l'invention peut être utilisé non seulement pour le réglage par l'utilisateur mais également lors de la fabrication pour des contrôles de qualité.

Habituellement les tensions continues d'alimentation des divers composants électroniques sont produites à partir de l'alimentation THT. Il en est ainsi de la tension de référence unique utilisée pour les convertisseurs numériques-analogiques 22, 23. Il est important que cette tension de référence reste constante ou garde une valeur permettant de conserver toujours le même effet sur le faisceau d'électrons. Or, lorsque la puissance fournie par la THT augmente, la tension d'accélération du faisceau d'électrons diminue et l'efficacité des déviateurs de convergence devient plus grande, ce qui modifie le réglage. Pour remédier à cet inconvénient on prévoit un circuit de régulation qui diminue la tension de référence des convertisseurs numériques-analogiques lorsque la puissance THT augmente.

Pour éviter une erreur de manipulation du boîtier de télécommande 110 après que les réglages aient été effectués on prévoit sur le bâti un commutateur qui, quand il est dans une position déterminée, inhibe l'action des touches 113 .

**Revendications**

1. Dispositif de réglage de géométrie pour vidéoprojecteur en couleurs à trois tubes monochromes (11, 12, 13) projetant chacun une image d'une couleur déterminée sur un écran (9), caractérisé en ce qu'il comporte un circuit (18) de correction de géométrie réglable par l'utilisateur pour effectuer, par la modification d'un seul signal ($V_{cont}$), une correction d'amplitude verticale, de linéarité verticale et de trapèze horizontal par action sur le balayage de chaque tube.

2. Dispositif selon la revendication 1, caractérisé en ce que les signaux de correction sont appliqués à des bobinages auxiliaires (14, 15) de correction de géométrie des trois tubes.

3. Dispositif selon la revendication 1 ou 2, caractérisé en ce qu'il comporte un intégrateur (51) intégrant un signal à la fréquence trame ($f_v$) dont la valeur correspond au dit seul signal ($V_{cont}$) et est réglable par l'utilisateur, le signal de sortie de l'intégrateur (51) étant est utilisé pour effectuer lesdites corrections d'amplitude verticale et la correction de trapèze horizontal ainsi qu'un second intégrateur (54) alimenté par le signal de sortie du premier intégrateur (51) pour commander la correction de linéarité en direction verticale.

4. Dispositif selon l'une quelconque des revendications précédentes, caractérisé en ce qu'il comporte un boîtier de télécommande (110), par exemple du type à infrarouges, présentant à la fois des touches pour les fonctions habituelles d'un récepteur de télévision et des touches (113) pour le réglage, dont une seule touche (130) pour la dite correction de géométrie.

5. Dispositif selon la revendication 2, caractérisé en ce qu'il comporte un circuit de correction des convergences qui applique des signaux aux bobinages auxiliaires des deuxième et troisième tubes.

6. Dispositif selon la revendication 2, caractérisé en ce que les réglages de géométrie accessibles à l'utilisateur agissent sur les bobinages auxiliaires de déviation verticale et sur la modulation Est-Ouest.

7. Dispositif selon la revendication 3, caractérisé en ce que la tension de référence des intégrateurs est réglable lors d'un changement de standard.

**Claims**

1. A geometry adjusting device for a colour videoprojector including three monochrome tubes (11, 12, 13) each projecting a picture of a predetermined colour onto a screen (9), characterized in that it comprises a geometry correcting circuit (18) adjustable by the user for performing via the modification of a single signal ($V_{cont}$) a correction of the vertical amplitude, of the vertical linearity and of the horizontal keystone distortion by acting upon the scanning of each tube.

2. A device according to claim 1, characterized in that the correction signals are applied to auxiliary geometry correcting coils (14, 15) of the tubes.

3. A device according to claim 1 or 2, characterized in that it comprises an integrator (51) adapted to integrate a signal having the frame frequency ($f_v$) whose value corresponds to said single signal ($V_{cont}$) and is adjustable by the user, the output signal of the integrator (51) being used for performing said vertical amplitude correction and said horizontal keystone distortion correction, and that it comprises a second integrator (54) fed by the output signal of the first integrator (51) in order to control the linearity correction in vertical direction.

4. A device according to any one of the preceding claims, characterized in that it comprises a remote control unit (110) for instance of the infrared type, having keys for the usual functions of a television receiver as well as adjustment keys (113), one single of these keys (130) serving for said geometry correction.

5. A device according to claim 2, characterized in that it comprises a circuit for correcting convergences, which circuit applies signals to the auxiliary coils of the second and the third tube.

6. A device according to claim 2, characterized in that the geometry adjustments accessible to the user operate on the auxiliary coils for vertical deflection and on the east-west-modulation.

7. A device according to claim 3, characterized in that the reference voltage of the integrators is adjustable in the event of a change of standard.

## Patentansprüche

1. Vorrichtung zur Einregelung der Geometrie für einen Videofarbprojektor mit drei Einfarbenröhren (11, 12, 13), die je ein Bild in einer bestimmten Farbe auf einen Schirm (9) werfen, dadurch gekennzeichnet, daß sie eine Schaltung (18) zur Korrektur der Geometrie aufweist, die vom Benutzer über die Änderung eines einzigen Signals ($V_{cont}$) zur Herbeiführung einer Korrektur der Vertikalamplitude, der Vertikallinearität und der Horizontaltrapezverformung durch Einwirken auf die Ablenkung jeder Röhre einstellbar ist.

2. Vorrichtung nach Anspruch 1, dadurch gekennzeichnet, daß die Korrektursignale an Hilfsspulen (14, 15) zur Geometriekorrektur der drei Röhren angelegt werden.

3. Vorrichtung nach Anspruch 1 oder 2, dadurch gekennzeichnet, daß sie ein Integrierglied (51) zum Integrieren eines Signals mit Vertikalablenkfrequenz ($f_v$), dessen Wert demjenigen des einzigen Signals ($V_{cont}$) entspricht und durch den Benutzer einstellbar ist, wobei das Ausgangssignal des Integriergliedes (51) zur Durchführung der Korrekturen der Vertikalamplitude und der Korrektur der Horizontaltrapezverformung benutzt wird, sowie ein zweites Integrierglied (54) aufweist, das vom Ausgangssignal des ersten Integrierglieds (51) gespeist wird und der Steuerung der Korrektur der Linearität in Vertikalrichtung dient.

4. Vorrichtung nach einem der vorhergehenden Ansprüche, dadurch gekennzeichnet, daß sie eine Fernsteuerung (110), beispielsweise vom Infrarottyp, aufweist, die zugleich Tasten für die üblichen Funktionen eines Fernsehempfängers und Einstelltasten (113) besitzt, darunter eine einzige Taste (130) für die Geometriekorrektur.

5. Vorrichtung nach Anspruch 2, dadurch gekennzeichnet, daß sie eine Konvergenzkorrekturschaltung aufweist, die Signale an die Hilfsspulen der zweiten und der dritten Röhre anlegt.

6. Vorrichtung nach Anspruch 2, dadurch gekennzeichnet, daß die dem Benutzer zugänglichen Geometrieregelungen auf die Hilfsspulen der Vertikalablenkung und auf die Ost-West-Modulation einwirken.

7. Vorrichtung nach Anspruch 3, dadurch gekennzeichnet, daß die Bezugsspannung der Integrierglieder im Rahmen einer Änderung der Norm einstellbar ist.

# FIG_1

FIG_2

Vers Modulateur E/O

FIG_3

# FIG_4

*114*

N   RAZ 525 625 Convergence

| 1 | 2 | 3 | 4 | 5 |
| 6 | 7 | 8 | 9 | 10 |

*111*

AUTO.  MANU.  *115* R  *117*

*116*  [ ]  [ ]  [ ]   ↓   ↑
                        *119₁*  *119₂*

Avance        B          ←    →
*120*  [ ]  [ ]  [ ]   *119₃*  *119₄*

*130*  *118*       *119*

*113*

| + | + | + | + | + |
| − | − | − | − | − |

*112*